# EUROPEAN PATENT APPLICATION

(11) **EP 2 937 284 A1**
(43) Date of publication of application: **28.10.2015**
(21) Application number: 14165772.6
(22) Date of filing: 24.04.2014
(51) Int. Cl.: B64D 11/00, B64D 11/04

(54) **Galley cooling system and method of operating a galley cooling system**

(71) Applicant: Airbus Operations GmbH, 21129 Hamburg (DE)
(72) Inventor: Truemper, Torsten, 21129 Hamburg (DE)
(74) Representative: Schicker, Silvia

(57) **Abstract**

A galley cooling system (10) suitable for use in an aircraft comprises a trolley compartment (18) comprising a front side access opening (20), a back wall (22) arranged opposite to the front side access opening (20) and two sidewalls (24, 26). The galley cooling system (10) further comprises a cooling unit (12) adapted to provide a cooling fluid, wherein the cooling unit (12) comprises a cooling fluid outlet (16). A cooling fluid supply manifold (32) is connected to the cooling fluid outlet (16) of the cooling unit (12) and has a cooling fluid supply manifold wall (38; 38a, 38b) extending substantially parallel to at least one sidewall (24, 26) of the trolley compartment (18). A cooling fluid supply opening (40; 40a, 40b) is provided so as to supply cooling fluid provided by the cooling unit (12) to the trolley compartment (18).

## Description

The invention relates to a galley cooling system suitable for use in an aircraft to cool trolleys containing, for example, food to be supplied to the aircraft passengers and to a method of operating a galley cooling system of this kind.

At present, in modern passenger aircraft, meals and beverages to be supplied to the aircraft passengers during flight are stored in trolleys which are accommodated in cooled compartments of galleys until they are delivered by the cabin crew. Two different systems for supplying cooling air to the items to be cooled may be used, which are described, for example, in DE 10 2010 031 909 A1 and WO 2012/025200 A1. So-called air-over systems comprise a heat-insulated cooling chamber sealed against leakages, through which flows cooling air provided by an air chiller or a cooling station of a central cooling system of the aircraft. The trolleys loaded with the items to be cooled can be pushed into the cooling chamber. Trolleys suitable for use in an air-over system are not insulated themselves, but rather have air openings which allow unhindered circulation of cooling air from the cooling chamber through the trolleys and consequently over the items held in the trolleys. By contrast, in so-called air-through systems, the trolleys are connected to the air chiller or the cooling station of the central cooling system via corresponding cooling air connections provided on the trolleys, so that the cooling air provided by the air chiller or the cooling station can be passed directly through the trolleys. To avoid losses of cooling energy, trolleys provided for use in an air-through system must be provided with heat insulation and be sealed against leakages.

A cooling arrangement wherein the air-through principle is combined with an air-over system is described in EP 2 650 216 A1 and US 2013/292102 A2. In the cooling arrangement of EP 2 650 216 A1 and US 2013/292102 A2 a cooling fluid is circulated through a trolley received within a galley compartment via a cooling fluid inlet and a cooling fluid outlet of the trolley. In addition thereto, the galley compartment accommodating the trolley is provided with a cooling air inlet for supplying cooling air to the compartment and a cooling air outlet for discharging the cooling air from the compartment.

The invention is directed to the object to provide a galley cooling system suitable for use in an aircraft which allows cooling at least one trolley containing, for example, food to be supplied to the aircraft passengers in an effective manner and which efficiently utilizes the available installation space. Furthermore, the invention is directed to the object to specify a method of operating a galley cooling system of this kind.

This object is achieved by a galley cooling system having the features of Claim 1 and by a method of operating a galley cooling system having the features of Claim 11.

A galley cooling system according to the invention which is suitable for use in an aircraft, for example, to cool food to be supplied to the aircraft passengers, but also for other purposes comprises a trolley compartment adapted to accommodate at least one trolley which may, for example, be loaded with food or other items which require appropriate cooling. Preferably, the trolley compartment forms a compartment of an aircraft galley which may be arranged in a lower section of the aircraft galley in order to allow a trolley, which typically is equipped with wheels, to be pushed into the compartment in an easy and convenient manner. The trolley compartment comprises a front side access opening, a back wall arranged opposite to the front side access opening and two sidewalls. Preferably, the sidewalls extend at an angle of approximately 90° relative to the back wall and substantially parallel to each other. The trolley compartment may further comprise a door for closing the front side access opening. Moreover, the trolley compartment may be sealed against the ambient, for example, by means of a sealing system described in DE 10 2010 031 909 A1 and WO 2012/025200 A1.

Furthermore, the galley cooling system comprises a cooling unit adapted to provide a cooling fluid. The cooling fluid provided by the cooling unit preferably is ambient air which, upon flowing through a heat exchanger of the cooling unit, is supplied with cooling energy and hence cooled. For example, a refrigerant which is cooled to a temperature of approximately -9°C may be guided through the heat exchanger of the cooling unit so as to cool the cooling fluid. Preferably, the cooling unit is arranged inside the trolley compartment. It is, however, also conceivable to arrange the cooling unit outside the trolley compartment. The cooling unit comprises a cooling fluid outlet. In case the cooling unit is installed inside the trolley compartment, the cooling unit is protected from environmental influences. Furthermore, cooling energy losses occurring upon directing the cooling fluid provided by the cooling unit from an installation site outside the trolley compartment into the trolley compartment can be avoided. The cooling fluid outlet of the cooling unit may face a floor or a top wall of the trolley compartment. Furthermore, the cooling unit may be installed in the interior or outside of the trolley compartment with its main surfaces extending substantially parallel to at least one sidewall of the trolley compartment. The cooling unit then can be installed within the trolley compartment in a particularly space saving manner.

A cooling fluid supply manifold of the galley cooling system is connected to the cooling fluid outlet of the cooling unit and hence receives the cooling fluid exiting the outlet of the cooling unit. The cooling fluid supply manifold has a cooling fluid supply manifold wall extending substantially parallel to at least one sidewall of the trolley compartment. In particular, the cooling fluid supply manifold wall may extend substantially flush with a main surface of the cooling unit or the cooling unit may be accommodated within the cooling fluid supply manifold. In addition, the cooling fluid supply manifold may extend substantially parallel to at least one sidewall, in particular both sidewalls, and substantially perpendicular to the floor and/or the top wall of the trolley compartment. A cooling fluid supply opening is provided so as to supply cooling fluid provided by the cooling unit to the trolley compartment. The cooling fluid supply opening may be provided in the cooling fluid supply manifold wall or in a sidewall of the trolley compartment.

In the galley cooling system, the cooling fluid provided by the cooling unit is distributed within the trolley compartment by means of a cooling fluid supply opening which may be arranged in a cooling fluid supply manifold wall extending substantially parallel to at least one sidewall of the trolley compartment or in the sidewall of the trolley compartment. Cooling fluid supplied to the trolley compartment via the cooling fluid supply opening thus flows out of the cooling fluid supply opening substantially in the direction of a sidewall of the trolley compartment which is arranged so as to face the cooling fluid supply opening. The cooling fluid thus is effectively distributed within the trolley compartment in a direction perpendicular to the longitudinal axis of the trolley compartment providing for an effective cooling of a trolley received within the trolley compartment. Hence, in the galley cooling system, a cooling fluid supply manifold extending along the back wall of the trolley compartment, i.e. through a rear part of the trolley compartment, as well as a cooling fluid supply opening arranged in the region of the back wall of the trolley compartment can be dispensed with. This arrangement is particularly advantageous in case the installation space in the region of the back wall of the trolley compartment is limited, for example in case the entire depth of the trolley compartment in the direction of the longitudinal axis of the trolley compartment should be used for accommodating trolleys.

The cooling fluid supply opening may be designed in the form of a slit or may comprise a plurality of slits or openings and may be arranged so as to extend substantially parallel to a longitudinal axis of the trolley compartment, preferably along the cooling fluid supply manifold wall or the sidewall of the trolley compartment. Preferably, the cooling fluid supply opening extends over at least two thirds of a length of the trolley compartment along the longitudinal axis of the trolley compartment. This design of the cooling fluid supply opening ensures an even distribution of the cooling fluid along the longitudinal axis of the trolley compartment upon being supplied to the trolley compartment.

In a preferred embodiment, the galley cooling system further comprises a cooling fluid discharge manifold connected to a cooling fluid inlet of the cooling unit and having a cooling fluid discharge manifold wall. A cooling fluid discharge opening may be provided so as to discharge cooling fluid heated upon circulating through the trolley compartment from the trolley compartment. Preferably, the cooling fluid discharge opening is provided in the cooling fluid discharge manifold wall or a sidewall of the trolley compartment. Cooling fluid heated upon circulating through the trolley compartment then may be circulated back to the cooling unit, cooled again and reused for further cooling the trolley compartment. Like the cooling fluid supply opening, also the cooling fluid discharge opening may be designed in the form of a slit or may comprise a plurality of slits or openings and may be arranged so as to extend substantially parallel to a longitudinal axis of the trolley. Preferably, the cooling fluid discharge opening extends over at least two thirds of a length of the trolley compartment along the longitudinal axis of the trolley compartment.

The cooling fluid supply opening may be provided in a region adjacent to a floor of the trolley compartment, i.e. in a region of the cooling fluid supply manifold wall or the sidewall of the trolley compartment which is arranged close to a floor of an aircraft cabin when the galley cooling system is installed in an aircraft. The cooling fluid discharge opening may be provided in a region adjacent to a top wall of the trolley compartment, i.e. a region of the cooling fluid discharge manifold wall which is arranged close to the top wall forming an upper limitation of the trolley compartment. Cooled cooling fluid then may be guided into a lower region of the trolley compartment, whereas cooling fluid which has been heated due to the transfer of thermal energy from a trolley arranged within the trolley compartment is discharged from an upper region of the trolley compartment. The direction of flow of the cooling fluid then may follow a direction of flow induced by thermal convection allowing a conveying device for conveying the cooling fluid through the trolley compartment to be operated in an efficient manner. As an alternative, it is, however, also possible to arrange the cooling fluid supply opening in a region adjacent to a top wall of the trolley compartment and to arrange the cooling fluid discharge opening in a region adjacent to a floor of the trolley compartment.

In a preferred embodiment of the galley cooling system, the cooling fluid discharge manifold extends substantially parallel to the top wall of the trolley compartment, with the cooling fluid discharge opening facing an interior of the trolley compartment. Specifically, the cooling fluid discharge manifold may be integrated into a working plate of the galley in such a manner that the cooling fluid discharge manifold is defined by the cooling fluid discharge manifold wall separating the cooling fluid discharge manifold from the interior of the trolley compartment and an inner surface of the top wall of the trolley compartment. An outer surface of the top wall of the trolley compartment may define a working surface of the working plate. A cooling fluid discharge manifold extending substantially parallel to the top wall of the trolley compartment allows an efficient discharge of cooling fluid from the trolley compartment and, simultaneously, can be designed in a space saving manner, in particularly without using installation space in the region of the back wall of the trolley compartment.

The cooling fluid discharge manifold may be connected to the cooling fluid inlet of the cooling unit via a connecting manifold extending substantially parallel to at least one sidewall of the trolley compartment. In particular, the connecting manifold may extend substantially parallel to both sidewalls, and substantially perpendicular to the floor and/or the top wall of the trolley compartment. A connecting manifold wall may extend substantially flush with a main surface of the cooling unit or the cooling unit may be accommodated within the connecting manifold.

The galley cooling system may comprise a control unit, in particular an electronic control unit, for controlling the supply of cooling fluid to the trolley compartment. For example, the control unit may be adapted to control a conveying device for conveying the cooling fluid through the trolley compartment, wherein the conveying device may be designed in the form of a blower or fan. Furthermore, the control unit may be adapted to control further flow guiding elements such as, for example, valves or movable flow deflecting elements.

Specifically, the control unit may be adapted to control a volume flow, a speed and/or a direction of flow of the cooling fluid supplied to the trolley compartment from the cooling unit in such a manner that the cooling fluid entering the trolley compartment via the cooling fluid supply opening is guided from the cooling fluid supply manifold wall through a lower region of the trolley compartment in the direction of a sidewall of the trolley compartment which is faces the cooling fluid supply manifold wall, and thereafter is deflected about approximately 90° and guided across an inner surface of the sidewall of the trolley compartment. In addition, the control unit may be adapted to control the volume flow, the speed and/or the direction of flow of the cooling fluid supplied to the trolley compartment from the cooling unit in such a manner that, after flowing across the inner surface of the sidewall of the trolley compartment, the flow of cooling fluid again is deflected about approximately 90° so as to flow through an upper region of the trolley compartment along an inner surface of the top wall of the trolley compartment or the cooling fluid supply manifold wall before finally being discharged from the trolley compartment via the cooling fluid discharge opening provided in the cooling fluid discharge manifold.

In case at least one trolley is accommodated within the trolley compartment, the control unit thus may be adapted to control the volume flow, the speed and/or the direction of flow of the cooling fluid supplied to the trolley compartment from the cooling unit in such a manner that the cooling fluid entering the trolley compartment via the cooling fluid supply opening is guided across an outer surface of a bottom wall of the trolley received within the trolley compartment, thereafter is guided across an outer surface of a sidewall of the trolley which faces away from the cooling fluid supply manifold wall, and finally is guided across an outer surface of a top wall of a trolley. This allows an evenly and effective cooling of the trolley and hence the items stored within the trolley. Furthermore, the development of a large thermal gradient along the longitudinal axis of the trolley compartment is prevented.

This is particularly advantageous in case a trolley accommodated within the trolley compartment is designed in the form of a long trolley, i.e. has a length in the direction of the longitudinal axis of the trolley compartment which is significantly larger than a width of the trolley in a direction perpendicular to the longitudinal axis of the trolley compartment, or in case a plurality of trolleys arranged in a row one behind another along the longitudinal axis of the trolley compartment is accommodated within the trolley compartment, wherein the row of trolleys has a length in the direction of the longitudinal axis of the trolley compartment which is significantly larger than a width of the row of trolleys in a direction perpendicular to the longitudinal axis of the trolley compartment.

The trolley compartment may in particular be designed so as to receive a plurality of trolleys arranged one behind another in a row with their sidewalls extending substantially parallel to the sidewalls of the trolley compartment. The trolley compartment then is particularly suitable for use in the galley of a modern passenger aircraft, wherein the crew faces increased catering volumes due to the large number of passengers on board the aircraft. For example, the trolley compartment may be designed so as to receive three standard half-sized trolleys arranged in a row one behind another. Alternatively or additionally thereto, the trolley compartment may be designed so as to receive a plurality of trolleys arranged side by side with their sidewalls extending substantially parallel to the sidewalls of the trolley compartment. In a preferred embodiment of the galley cooling system, the trolley compartment is designed so as to receive four rows of standard half-sized trolleys in a side by side arrangement, wherein the sidewalls of the trolleys extend substantially parallel to the sidewalls of the trolley compartment.

In particular in case the trolley compartment is designed so as to receive a plurality of trolleys arranged side by side, the control unit preferably is adapted to control the volume flow, the speed and/or the direction of flow of the cooling fluid supplied to the trolley compartment from the cooling unit in such a manner that the cooling fluid entering the trolley compartment via the cooling fluid supply opening is guided through a gap existing between the trolleys arranged within the trolley compartment side by side so as to flow across outer surfaces of the sidewalls of the trolleys. In other words, the control unit may be adapted to control the operation of a conveying device and/or other suitable means for guiding the flow of cooling fluid through the trolley compartment in such a manner that the flow of cooling fluid, after flowing across the outer surface of a bottom wall of a trolley arranged adjacent to the cooling fluid supply opening is divided into a first partial flow and a second partial flow.

The first partial flow may flow through the gap between the trolley arranged adjacent to the cooling fluid supply opening and a further trolley arranged further away from the cooling fluid supply opening. After passing through the gap between the adjacent trolleys, the first partial flow may be guided across the outer surface of the top wall of the trolley arranged adjacent to the cooling fluid inlet and finally enter the cooling fluid discharge opening. Contrary thereto, the second partial flow may flow across the outer surface of the bottom wall of the trolley arranged further away from the cooling fluid supply opening and thereafter across the outer surface of the sidewall of the trolley arranged further away from the cooling fluid supply opening which faces away from the cooling fluid supply opening. After passing a gap existing between the sidewall of the trolley arranged further away from the cooling fluid supply opening and a sidewall of a further trolley or the sidewall of the trolley compartment, the second partial flow may flow across the outer surface of the top wall of the trolley arranged further away from the cooling fluid supply opening before it is discharged from the trolley compartment via the cooling fluid discharge opening. In case more than two rows of trolleys are arranged in the trolley compartment, the flow of cooling fluid is divided into a respective number of partial flows.

The cooling unit of the galley cooling system may be designed in the form of an autonomously working air chiller. Preferably, however, the cooling unit is designed in the form of a cooling station which is connected to a central refrigerating device of a central cooling system of the aircraft, for example via a suitable cooling circuit which allows the circulation of a liquid refrigerant therethrough. The cooling unit then may be of a particularly compact design. Furthermore, noise occurring during operation of an air chiller can be avoided.

The cooling unit may be arranged inside the trolley compartment adjacent to one of the sidewalls of the trolley compartment. The cooling fluid supply manifold then may be defined by the cooling fluid supply manifold wall separating the cooling fluid supply manifold from the interior of the trolley compartment and an inner surface of the sidewall of the trolley compartment. Alternatively thereto, the cooling unit may be arranged inside the trolley compartment in such a manner that the cooling unit and the cooling fluid supply manifold separate a first and a second receiving space provided in the trolley compartment for receiving trolleys.

The cooling fluid supply manifold then may comprise a first cooling fluid supply manifold wall facing a first sidewall of the trolley compartment and a second cooling fluid supply manifold wall facing a second sidewall of the trolley compartment. A first cooling fluid supply opening may be provided in the first cooling fluid supply manifold wall so as to supply cooling fluid provided by the cooling unit to the first receiving space of the trolley compartment. A second cooling fluid supply opening may be provided in the second cooling fluid supply manifold wall so as to supply cooling fluid provided by the cooling unit to the second receiving space of the trolley compartment. Thus, an effective distribution of the cooling fluid within the first and the second receiving space is ensured.

The cooling fluid discharge manifold may comprise a first portion associated with the first receiving space of the trolley compartment and a second portion associated with the second receiving space of the trolley compartment. A first cooling fluid discharge opening may be provided in the cooling fluid discharge manifold wall of the first portion of the cooling fluid discharge manifold so as to discharge cooling fluid heated upon circulating through the first receiving space of the trolley compartment from the first receiving space of the trolley compartment. A second cooling fluid discharge opening may be provided in the cooling fluid discharge manifold wall of the second portion of the cooling fluid discharge manifold so as to discharge cooling fluid heated upon circulating through the second receiving space of the trolley compartment from the second receiving space of the trolley compartment.

Regions of the first and the second receiving space of the trolley compartment which are disposed adjacent to the cooling fluid discharge manifold may be separated from each other by the connecting manifold which connects the cooling fluid discharge manifold to the cooling fluid inlet of the cooling unit. For example, the connecting manifold may separate upper regions of the first and the second receiving space of the trolley compartment which are disposed adjacent to the top wall of the trolley compartment.

In a method, according to the invention, of operating a galley cooling system suitable for use in an aircraft, a cooling fluid is provided to a trolley compartment comprising a front side access opening, a back wall arranged opposite to the front side access opening and two sidewalls by means of a cooling unit via a cooling fluid outlet of the cooling unit. The cooling fluid provided by the cooling unit is directed through a cooling fluid supply manifold connected to the cooling fluid outlet of the cooling unit and having a cooling fluid supply manifold wall extending substantially parallel to at least one sidewall of the trolley compartment. The cooling fluid directed through the cooling fluid supply manifold is supplied to the trolley compartment via a cooling fluid supply opening.

Cooling fluid heated upon circulating through the trolley compartment may be discharged from the trolley compartment via a cooling fluid discharge opening and a cooling fluid discharge manifold. The cooling fluid discharge manifold may be connected to a cooling fluid inlet of the cooling unit.

The cooling fluid may be supplied to the trolley compartment via a cooling fluid supply opening provided in a region adjacent to a floor of the trolley compartment. The cooling fluid may be discharged from the trolley compartment via a cooling fluid discharge opening provided adjacent to a top wall of the trolley compartment.

Preferably, the cooling fluid is discharged from the trolley compartment via a cooling fluid discharge manifold extending substantially parallel to the top wall of the trolley compartment with the cooling fluid discharge opening facing an interior of the trolley compartment. Cooling fluid flowing through the cooling fluid discharge manifold may be directed to the cooling fluid inlet of the cooling unit via a connecting manifold extending substantially parallel to at least one sidewall of the trolley compartment.

A volume flow, a speed and/or a direction of flow of the cooling fluid supplied to the trolley compartment from the cooling unit may be controlled in such a manner that the cooling fluid entering the trolley compartment via the cooling fluid supply opening is guided across an outer surface of a bottom wall of a trolley received within the trolley compartment, thereafter is guided across an outer surface of a sidewall of the trolley which faces away from the cooling fluid supply opening, and finally is guided across an outer surface of a top wall of the trolley.

The trolley compartment may be designed so as to receive a plurality of trolleys arranged one behind another in a row with their sidewalls extending substantially parallel to the sidewalls of the trolley compartment. Alternatively or additionally thereto, the trolley compartment may be designed so as to receive a plurality of trolleys arranged side by side with their sidewalls extending substantially parallel to the sidewalls of the trolley compartment. The volume flow, the speed and/or the direction of flow of the cooling fluid supplied to the trolley compartment may be controlled in such a manner that the cooling fluid entering the trolley compartment via the cooling fluid supply opening is guided through a gap existing between trolleys arranged within the trolley compartment side by side so as to flow across outer surfaces of the sidewalls of the trolleys.

Cooling fluid may be provided by means of a cooling unit which is arranged inside the trolley compartment adjacent to one of the sidewalls of the trolley compartment or in such a manner that the cooling unit and the cooling fluid supply manifold separate a first and a second receiving space provided in the trolley compartment for receiving trolleys.

Cooling fluid provided by the cooling unit may be supplied to the first and the second receiving space of the trolley compartment via a cooling fluid supply manifold comprising a first cooling fluid supply manifold wall facing a first sidewall of the trolley compartment and a second cooling fluid supply manifold wall facing a second sidewall of the trolley compartment. A first cooling fluid supply opening may be provided in the first cooling fluid supply manifold wall and may supply cooling fluid provided by the cooling unit to the first receiving space of the trolley compartment. A second cooling fluid supply opening may be provided in the second cooling fluid supply manifold wall and may supply cooling fluid provided by the cooling unit to the second receiving space of the trolley compartment.

Cooling fluid may be discharged from the first and the second receiving space of the trolley compartment via a cooling fluid discharge manifold comprising a first portion associated with the first receiving space of the trolley compartment and a second portion associated with the second receiving space of the trolley compartment. A first cooling fluid discharge opening may be provided in the cooling fluid discharge manifold wall of the first portion of the cooling fluid discharge manifold and may discharge cooling fluid heated upon circulating through the first receiving space of the trolley compartment from the first receiving space of the trolley compartment. A second cooling fluid discharge opening may be provided in the cooling fluid discharge manifold wall of the second portion of the cooling fluid discharge manifold and may discharge cooling fluid heated upon circulating through the second receiving space of the trolley compartment from the second receiving space of the trolley compartment.

Preferred embodiments of the invention will now be explained in more detail with reference to the appended schematic drawings, wherein
- Figure 1: a front view of a first embodiment of a galley cooling system suitable for use on board an aircraft for cooling food to be supplied to the aircraft passengers, and
- Figure 2: shows a front view of a second embodiment of a galley cooling system suitable for use on board an aircraft for cooling food to be supplied to the aircraft passengers.

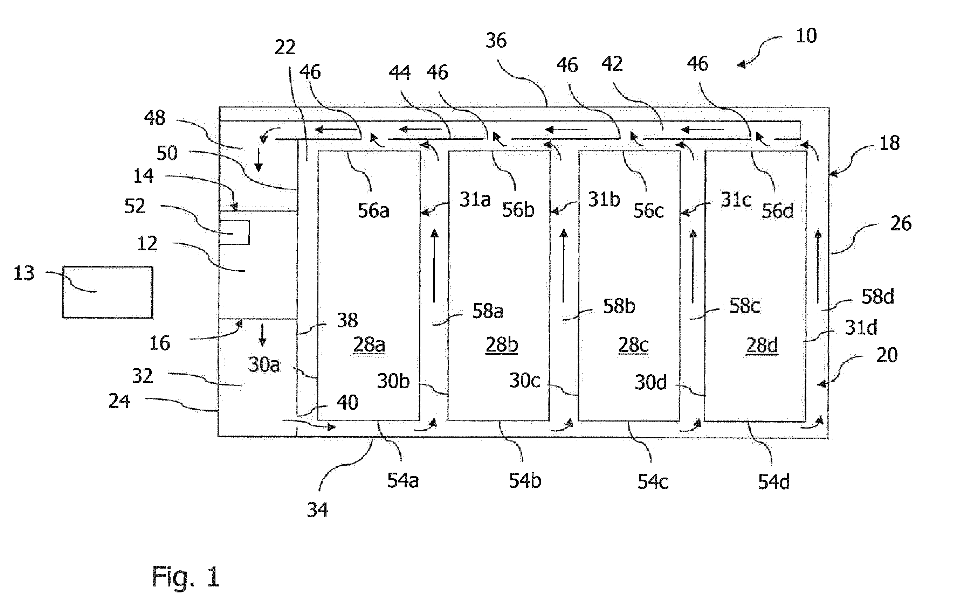

Figure 1 shows a galley cooling system 10 suitable for use in an aircraft galley. The galley cooling system 10 comprises a cooling unit 12 which is adapted to provide a cooling fluid. The cooling unit 12 is designed in the form of a cooling station which is connected to a central refrigerating device 13 of a central cooling system of the aircraft via a suitable cooling circuit (not shown) allowing the circulation of a liquid refrigerant therethrough. The cooling unit 12 is adapted to provide a cooling fluid in the form of cooled ambient air. In particular, ambient air enters the cooling unit 12 via a cooling unit inlet 14 and, in the cooling unit 12, is guided through a heat exchanger (not shown). Upon flowing through the heat exchanger of the cooling unit 12, the ambient air is cooled and exits the cooling unit 12 at a cooling unit outlet 16 with a desired low temperature.

The galley cooling system 10 further comprises a trolley compartment 18. The trolley compartment 18 comprises a front side access opening 20, a back wall 22 which is arranged opposite to the front side access opening 20 and two sidewalls 24, 26. The sidewalls 24, 26 of the trolley compartment 18 extend substantially parallel to each other, parallel to a longitudinal axis of the trolley compartment 18 and substantially perpendicular to the back wall 22. The longitudinal axis extends substantially perpendicular to the back wall 22 and the front side access opening 20. The trolley compartment 18 further comprises a door (not shown) which is adapted to close the front side access opening 20 of the trolley compartment 18 in a sealed manner.

The trolley compartment 18 is designed so as to receive twelve half-sized trolleys 28a, 28b, 28c, 28d. Three trolleys 28a are arranged one being another in a first row with their sidewalls 30a, 31a extending substantially parallel to the sidewalls 24, 26 of the trolley compartment 18. Moreover, three trolleys 28b are arranged one behind another in a second row with their sidewalls 30b, 31b extending substantially parallel to the sidewalls 24, 26 of the trolley compartment 18. Three trolleys 28c are arranged one being another in a third row with their sidewalls 30c, 31c extending substantially parallel to the sidewalls 24, 26 of the trolley compartment 18, and three trolleys 28d are arranged one behind another in a fourth row with their sidewalls 30d, 31d extending substantially parallel to the sidewalls 24, 26 of the trolley compartment 18.

The cooling unit 12 is arranged inside the trolley compartment 18 adjacent to a first sidewall 24 of the trolley compartment 18. Alternatively, it is also possible to arrange the cooling unit 12 inside the trolley compartment 18 adjacent to a second sidewall 26 of the trolley compartment 18. A cooling fluid supply manifold 32 is connected to the cooling fluid outlet 16 of the cooling unit 12. The cooling fluid supply manifold 32 extends adjacent to the first sidewall 24 of the trolley compartment 18 substantially perpendicular to a floor 34 and a top wall 36 of the trolley compartment 18 and has a cooling fluid supply manifold wall 38 extending substantially parallel to the first sidewall 24 of the trolley compartment 18. Hence, the cooling fluid supply manifold 32 is defined by the cooling fluid supply manifold wall 38 and the first sidewall 24 of the trolley compartment 18. Since the first and the second sidewall 24, 26 extend substantially parallel to each other, the cooling fluid supply manifold wall 38 extends substantially parallel also to the second sidewall 24 of the trolley compartment 18. Specifically, the cooling fluid supply manifold wall 38 extends flush with a main surface of the cooling unit 12 facing an interior of the trolley compartment 18. In the embodiment of a galley cooling system 10 depicted in the drawings, the cooling fluid supply manifold 32 extends from the cooling fluid outlet 16 of the cooling unit 12 in the direction of the floor 34 of the trolley compartment 18.

A cooling fluid supply opening 40 is provided in the cooling fluid supply manifold wall 38 so as to supply cooling fluid provided by the cooling unit 12 to the trolley compartment 18. In particular, the cooling fluid supply opening 40 is provided in a lower region of the cooling fluid supply manifold wall 38 adjacent to the floor 34 of the trolley compartment 18 and extends over at least two thirds of the length of the trolley compartment 18 along the longitudinal axis of the trolley compartment 18 parallel to the longitudinal axis of the trolley compartment 18.

The galley cooling system 10 further comprises a cooling fluid discharge manifold 42 which is connected to the cooling fluid inlet 14 of the cooling unit 12. The cooling fluid discharge manifold 42 has a cooling fluid discharge manifold wall 44, wherein a cooling fluid discharge opening 46 is provided so as to discharge cooling fluid heated upon circulating through the trolley compartment 18 from the trolley compartment 18. Specifically, the cooling fluid discharge opening 46 is defined by a plurality of slit-shaped openings formed in the cooling fluid discharge manifold wall 44 and extending over at least two thirds of the length of the trolley compartment 18 along the longitudinal axis of the trolley compartment 18 parallel to the longitudinal axis of the trolley compartment 18. Thus, cooling fluid heated upon flowing through the trolley compartment 18 and taking up heat from the trolleys 28a, 28b, 28c, 28d received within the trolley compartment 18 is circulated back to the cooling unit 12.

The cooling fluid discharge manifold 42 extends substantially parallel to the top wall 36 of the trolley compartment 18 with the cooling fluid discharge opening 46 facing the interior of the trolley compartment 18. Thus, the cooling fluid discharge opening 46 is provided in a region of the cooling fluid discharge manifold wall 44 adjacent to the top wall 36 of the trolley compartment 18. In particular, the cooling fluid discharge manifold 42 is integrated into a working plate of the aircraft galley with the cooling fluid discharge manifold wall 44 separating the cooling fluid discharge manifold 42 from the interior of the trolley compartment 18 and an inner surface of the top wall 36 of the trolley compartment 18 forming an upper limitation of the cooling fluid discharge manifold 42.

The cooling fluid discharge manifold 42 is connected to the cooling fluid inlet 14 of the cooling unit 12 via a connecting manifold 48 which extends substantially parallel to the first sidewall 24 of the trolley compartment 18. A connecting manifold wall 50 extends substantially parallel to the first sidewall 24 of the trolley compartment 18. Hence, the connecting manifold 48 is defined by the connecting manifold wall 50 and the first sidewall 24 of the trolley compartment. Since the first and the second sidewall 24, 26 extend substantially parallel to each other, the connecting manifold wall 38 extends substantially parallel also to the second sidewall 24 of the trolley compartment 18. Specifically, the connecting manifold wall 50 extends flush with a main surface of the cooling unit 12 facing an interior of the trolley compartment 18 from the cooling fluid inlet 14 of the cooling unit 12 in the direction of the top wall 36 of the trolley compartment 18.

In the galley cooling system 10 according to Figure 1, the cooling unit 12, the cooling fluid supply manifold 32 and the connecting manifold 48 are installed adjacent to the first sidewall 24 of the trolley compartment 18 and the cooling fluid discharge manifold 42 is arranged adjacent to the top wall 36 of the trolley compartment 18. As a result, the entire length of the trolley compartment 18 along the longitudinal axis thereof can be used for accommodating the trolleys 28a, 28b, 28c, 28d. The galley cooling system 10 therefore is particularly advantageous for use on board a passenger aircraft with high catering demands, for example due to a high number of passengers being present on board the aircraft.

The flow of cooling fluid through the trolley compartment 18 is controlled by means of a control unit 52. In particular, the control unit 52 serves to control the operation of a conveying device (not shown) for conveying the cooling fluid through the trolley compartment 18. The conveying device maybe designed in the form of a blower of a fan. Furthermore, the control unit 52 may be used to control further devices for controlling the flow of the cooling fluid through the trolley compartment 18 such as, for example, valves, flow deflecting elements and the like.

As becomes apparent from Figure 1, the control unit 52 controls a volume flow, a speed and a direction of flow of the cooling fluid supplied to the trolley compartment 18 from the cooling unit 12 in such a manner that the cooling fluid entering the trolley compartment 18 via the cooling fluid supply opening 40 is guided through a lower region of the trolley compartment 18 in the direction of the second sidewall 26 of the trolley compartment 18. Upon reaching the second sidewall 26, the cooling fluid flow is deflected about approximately 90° and flows across an inner surface of the second sidewall 26 of the trolley compartment 18. Thereafter, it is again deflected about approximately 90° and flows across an inner surface of the cooling fluid discharge manifold wall 44 which faces the interior of the trolley compartment 18 in the direction of the cooling fluid discharge opening 46 provided in the cooling fluid discharge manifold wall 44.

Hence, when trolleys 28a, 28b, 28c, 28d are accommodated within the trolley compartment 18, the cooling fluid is guided across an outer surface of bottom walls 54a, 54b, 54c, 54d of the trolleys 28a, 28b, 28, 28c, 28d. Thereafter, the cooling fluid is guided across an outer surface of the sidewalls 31a, 31b, 31c, 31d of the trolleys 28a, 28b, 28c, 28d which face away from the first sidewall 24 of the trolley compartment 18. Finally, the cooling fluid is guided across an outer surface of top walls 56a, 56b, 56c, 56d of the trolleys 28a, 28b, 28c, 28d.

As becomes apparent from Figure 1, the flow of cooling fluid, under the control of the control unit 52, after flowing across the outer surface of the bottom wall 54a of the trolleys 28a arranged adjacent to the cooling fluid supply opening 40 is divided into a first partial flow and a second partial flow. The first partial flow of the cooling fluid is guided is through a gap 58a existing between the trolleys 28a, 28b such that the first partial flow of the cooling fluid flows across adjacent sidewalls 31a, 30b of the trolleys 28a, 28b. After passing through the gap 58a between the adjacent trolleys 28a, 28b, the first partial flow of the cooling fluid is guided across the outer surface of the top wall 54a of the trolleys 28a arranged adjacent to the cooling fluid supply opening 40 and finally enters the cooling fluid discharge opening 46. The second partial flow flows across the outer surface of the bottom wall 52b of the trolleys 28b. After passing the outer surface of the bottom wall 52b of the trolleys 28b, a third partial flow of cooling fluid branches of from the second partial flow of cooling fluid and flows through a gap 58b existing between the trolleys 28b, 28c such that the third partial flow of the cooling fluid flows across adjacent sidewalls 31b, 30c of the trolleys 28b, 28c. After passing through the gap 58b between the adjacent trolleys 28b, 28c, the third partial flow of the cooling fluid is guided across the outer surface of the top wall 54b of the trolleys 28b and finally enters the cooling fluid discharge opening 46.

The second partial flow flows further across the outer surface of the bottom wall 52c of the trolleys 28c. After passing the outer surface of the bottom wall 52c of the trolleys 28c, a fourth partial flow of cooling fluid branches of from the second partial flow of cooling fluid and flows through a gap 58c existing between the trolleys 28c, 28d such that the fourth partial flow of the cooling fluid flows across adjacent sidewalls 31c, 30d of the trolleys 28c, 28d. After passing through the gap 58c between the adjacent trolleys 28c, 28d, the third partial flow of the cooling fluid is guided across the outer surface of the top wall 54c of the trolleys 28c and finally enters the cooling fluid discharge opening 46. Finally, the second partial flow flows across the outer surface of the bottom wall 52d of the trolleys 28d and thereafter enters a gap 58d existing between the sidewall 31d of the trolleys 28d and the second sidewall 26 of the trolley compartment 18. After passing the gap 58d, the second partial flow flows across the outer surface of the top wall 54d of the trolleys 28d before it is discharged from the trolley compartment 18 via the cooling fluid discharge opening 46.

Although not indicated in the drawings, a further partial flow of the cooling fluid develops in the region between the cooling fluid supply manifold wall 38 and the sidewalls 30a of the trolleys 28a, although this partial flow might be disturbed to a certain extent by the supply of cooling fluid via the cooling supply opening 40 and the discharge of cooling fluid via the cooling fluid discharge opening 46. In addition, cooling fluid flows develop between the door of the trolley compartment 18 and a front wall of the trolleys 28a, 28b, 28c, 28d arranged adjacent to the door as well as between the trolleys 28a, 28b, 28c, 28d arranged in row one behind the other, i.e. between a back wall of a trolley 28a, 28b, 28c, 28d arranged closer to the trolley compartment door and a front wall of a trolley 28a, 28b, 28c, 28d arranged further remote from the trolley compartment door. Finally, cooling fluid also flows through a gap existing between back walls of trolleys 28a, 28b, 28c, 28d and a back wall of the trolley compartment 18.

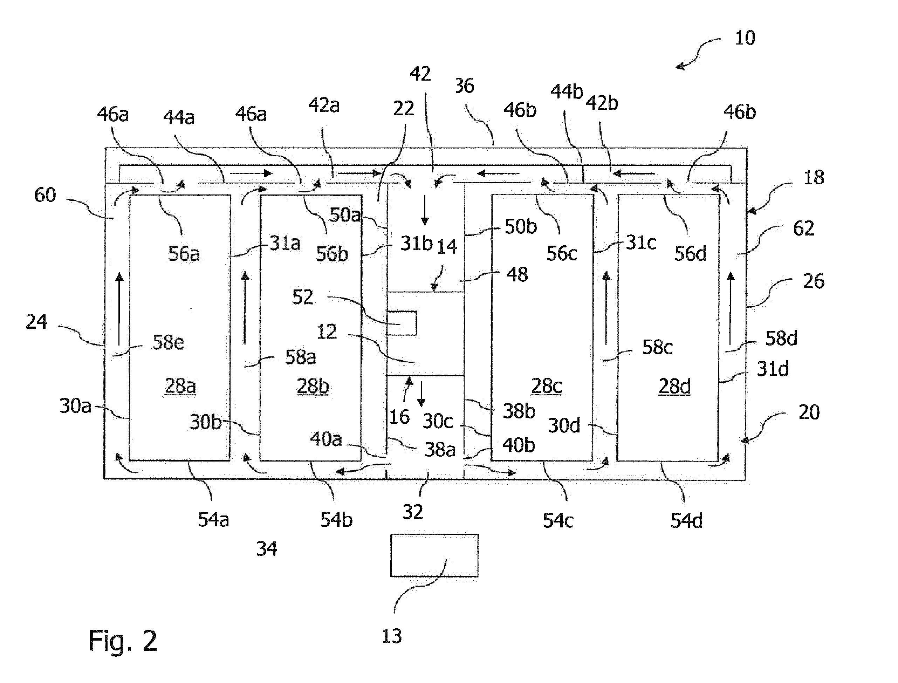

The galley cooling system 10 depicted in Figure 2 differs from the arrangement according to Figure 1 in that the cooling unit 12 and the cooling fluid supply manifold 32 are no longer arranged adjacent to one of the sidewalls 24, 26 of the trolley compartment 18, but instead are arranged inside the trolley compartment 18 in such a manner that the cooling unit 12 and the cooling fluid supply manifold 32 separate a first and a second receiving space 60, 62 provided in the trolley compartment 18 for receiving trolleys 28a, 28b, 28c, 28d. In particular, the cooling fluid supply manifold 32 comprises a first cooling fluid supply manifold wall 38a facing the first sidewall 24 of the trolley compartment 18 and a second cooling fluid supply manifold wall 38b facing the second sidewall 26 of the trolley compartment 18. A first cooling fluid supply opening 40a is provided in the first cooling fluid supply manifold wall 38a. Via the first cooling fluid supply opening 40a, cooling fluid provided by the cooling unit 12 is supplied to the first receiving space 60 of the trolley compartment 18. Moreover, a second cooling fluid supply opening 40b is provided in the second cooling fluid supply manifold wall 38b. Via the second cooling fluid supply opening 40b, cooling fluid provided by the cooling unit 12 is supplied to the second receiving space 62 of the trolley compartment 18.

The cooling fluid discharge manifold 42 comprises a first portion 42a associated with the first receiving space 60 of the trolley compartment 18 and a second portion 42b associated with the second receiving space 62 of the trolley compartment 18. A first cooling fluid discharge opening 46a is provided in the cooling fluid discharge manifold wall 44 of the first portion 42a of the cooling fluid discharge manifold 42 so that cooling fluid heated upon circulating through the first receiving space 60 of the trolley compartment 18 can be discharged from the first receiving space 60 of the trolley compartment 18 via the first cooling fluid discharge opening 46a. A second cooling fluid discharge opening 46b is provided in the cooling fluid discharge manifold wall 44 of the second portion 42b of the cooling fluid discharge manifold 42. Hence, cooling fluid heated upon circulating through the second receiving space 62 of the trolley compartment 18 can be discharged from the second receiving space 62 of the trolley compartment 18 via the second cooling fluid discharge opening 46b.

In the upper region of the trolley compartment 18 adjacent to the trolley compartment's 18 top wall 36, the first and the second receiving space 60, 62, i.e. upper regions thereof which are disposed adjacent to the cooling fluid discharge manifold 42 are separated from each other by the connecting manifold 50. Thus, similar to the cooling fluid supply manifold 32, also the connecting manifold 50 now comprises a first connecting manifold wall 50a which faces the first sidewall 24 of the trolley compartment 18 and a second connecting manifold wall 50b which faces the second sidewall 26 of the trolley compartment 18.

Under the control of the control unit 52, a first flow of cooling fluid exits the first cooling fluid supply opening 40a and flows through a lower region of the trolley compartment 18 in the direction of the first sidewall 24. After flowing across the outer surface of the bottom wall 54b of the trolleys 28b arranged adjacent to the first cooling fluid supply opening 40a, the flow of cooling fluid is divided into a first partial flow and a second partial flow. The first partial flow of the cooling fluid is guided is through the gap 58a existing between the trolleys 28a, 28b such that the first partial flow of the cooling fluid flows across adjacent sidewalls 31a, 30b of the trolleys 28a, 28b. After passing through the gap 58a between the adjacent trolleys 28a, 28b, the first partial flow of the cooling fluid is guided across the outer surface of the top wall 54b of the trolleys 28b arranged adjacent to the first cooling fluid supply opening 40a and finally enters the first cooling fluid discharge opening 46a.

The second partial flow flows across the outer surface of the bottom wall 52a of the trolleys 28a. After passing the outer surface of the bottom wall 52a of the trolleys 28a, the second partial flow flows enters a gap 58e existing between the sidewall 30a of the trolleys 28a and the first sidewall 24 of the trolley compartment 18. After passing the gap 58e, the second partial flow flows across the outer surface of the top wall 54a of the trolleys 28a before it is discharged from the trolley compartment 18 via the first cooling fluid discharge opening 46a.

To the contrary, a second flow of cooling fluid exits the second cooling fluid supply opening 40b and flows through a lower region of the trolley compartment 18 in the direction of the second sidewall 26. After flowing across the outer surface of the bottom wall 54c of the trolleys 28c arranged adjacent to the second cooling fluid supply opening 40b, the flow of cooling fluid is divided into a first partial flow and a second partial flow. The first partial flow of the cooling fluid is guided is through the gap 58c existing between the trolleys 28c, 28d such that the first partial flow of the cooling fluid flows across adjacent sidewalls 31c, 30d of the trolleys 28c, 28d. After passing through the gap 58c between the adjacent trolleys 28c, 28d, the first partial flow of the cooling fluid is guided across the outer surface of the top wall 54c of the trolleys 28c arranged adjacent to the second cooling fluid supply opening 40b and finally enters the second cooling fluid discharge opening 46b.

The second partial flow flows across the outer surface of the bottom wall 52d of the trolleys 28d. After passing the outer surface of the bottom wall 52d of the trolleys 28d, the second partial flow flows enters the gap 58d existing between the sidewall 31d of the trolleys 28d and the second sidewall 26 of the trolley compartment 18. After passing the gap 58d, the second partial flow flows across the outer surface of the top wall 54d of the trolleys 28d before it is discharged from the trolley compartment 18 via the second cooling fluid discharge opening 46b.

Otherwise the structure and the function of the galley cooling system 10 according to Figure 2 correspond to the structure and the function of the arrangement shown in Figure 1. While specific features of the galley cooling system 10 herein have been described with reference to specific embodiments of the galley cooling system 10, these features can be combined as desired.

## Claims

1. Galley cooling system (10) suitable for use in an aircraft, the galley cooling system (10) comprising:
- a trolley compartment (18) comprising a front side access opening (20), a back wall (22) arranged opposite to the front side access opening (20) and two sidewalls (24, 26),
- a cooling unit (12) adapted to provide a cooling fluid, wherein the cooling unit (12) comprises a cooling fluid outlet (16),
- a cooling fluid supply manifold (32) connected to the cooling fluid outlet (16) of the cooling unit (12) and having a cooling fluid supply manifold wall (38; 38a, 38b) extending substantially parallel to at least one sidewall (24, 26) of the trolley compartment (18), and
- a cooling fluid supply opening (40; 40a, 40b) so as to supply cooling fluid provided by the cooling unit (12) to the trolley compartment (18).

2. Galley cooling system according to Claim 1,
further comprising a cooling fluid discharge manifold (42; 42a, 42b) connected to a cooling fluid inlet (14) of the cooling unit (12) and having a cooling fluid discharge manifold wall (44), wherein a cooling fluid discharge opening (46; 46a, 46b) is provided so as to discharge cooling fluid heated upon circulating through the trolley compartment (18) from the trolley compartment (18).

3. Galley cooling system according to Claim 1 or 2,
wherein the cooling fluid supply opening (40; 40a, 40b) is provided in a region adjacent to a floor (34) of the trolley compartment (18) and/or wherein the cooling fluid discharge opening (46; 46a, 46b) is provided in a region adjacent to a top wall (36) of the trolley compartment (18).

4. Galley cooling system according to Claim 2 or 3,
wherein the cooling fluid discharge manifold (42; 42a, 42b) extends substantially parallel to the top wall (36) of the trolley compartment (18) with the cooling fluid discharge opening (46; 46a, 46b) facing an interior of the trolley compartment (18) and/or wherein the cooling fluid discharge manifold (42; 42a, 42b) is connected to the cooling fluid inlet (14) of the cooling unit (12) via a connecting manifold (50) extending substantially parallel to at least one sidewall (24, 26) of the trolley compartment (18).

5. Galley cooling system according to any one of Claims 1 to 4,
further comprising a control unit (52) which is adapted to control a volume flow, a speed and/or a direction of flow of the cooling fluid supplied to the trolley compartment (18) from the cooling unit (12) in such a manner that the cooling fluid entering the trolley compartment (18) via the cooling fluid supply opening (40; 40a; 40b) is guided across an outer surface of a bottom wall (54a, 54b, 54c, 54d) of a trolley (28a, 28b, 28c, 28d) received within the trolley compartment (18), thereafter is guided across an outer surface of a sidewall (31a, 31b, 31c, 31d; 30a, 30b, 31c, 31d) of the trolley (28a, 28b, 28c, 28d) which faces away from the cooling fluid discharge manifold wall (38; 38a, 38b), and finally is guided across an outer surface of a top wall (56a, 56b, 56c, 56d) of the trolley (28a, 28b, 28c, 28d).

6. Galley cooling system according to any one of Claims 1 to 5,
wherein the trolley compartment (18) is designed so as to receive a plurality of trolleys (28a, 28b 28c, 28d) arranged one behind another in a row with their sidewalls (30a, 31a, 30b, 31b, 30c, 31c, 30d, 31d) extending substantially parallel to the sidewalls (24, 26) of the trolley compartment (18), and/or wherein the trolley compartment (18) is designed so as to receive a plurality of trolleys (28a, 28b, 28c, 28d) arranged side by side with their sidewalls (30a, 31a, 30b, 31b, 30c, 31c, 30d, 31d) extending substantially parallel to the sidewalls (24, 26) of the trolley compartment (18).

7. Galley cooling system according to Claim 6,
wherein the control unit (52) is adapted to control the volume flow, the speed and/or the direction of flow of the cooling fluid supplied to the trolley compartment (18) from the cooling unit (12) in such a manner that the cooling fluid entering the trolley compartment (18) via the cooling fluid supply opening (40; 40a; 40b) is guided through a gap (58a, 58b, 58c; 58a, 58c) existing between trolleys (28a, 28b, 28c, 28d) arranged within the trolley compartment (18) side by side so as to flow across outer surfaces of the sidewalls (31a, 30b, 31b, 30c, 31c, 30d; 31a, 30b, 31c, 30d) of the trolleys (28a, 28b, 28c, 28d).

8. Galley cooling system according to any one of Claims 1 to 7,
wherein the cooling unit (12) is designed in the form of a cooling station which is connected to a central refrigerating device (13) of a central cooling system of the aircraft.

9. Galley cooling system according to any one of Claims 1 to 8,
wherein the cooling unit (12) is arranged inside the trolley compartment (18) adjacent to one of the sidewalls (24, 26) of the trolley compartment (18) or wherein the cooling unit (12) is arranged inside the trolley compartment (18) in such a manner that the cooling unit (12) and the cooling fluid supply manifold (32) separate a first and a second receiving space (60, 62) provided in the trolley compartment (18) for receiving trolleys (28a, 28b, 28c, 28d).

10. Galley cooling system according to Claim 9,
wherein the cooling fluid supply manifold (32) comprises a first cooling fluid supply manifold wall (38a) facing a first sidewall (24) of the trolley compartment (18) and a second cooling fluid supply manifold wall (38b) facing a second sidewall (26) of the trolley compartment (18), a first cooling fluid supply opening (40a) being provided in the first cooling fluid supply manifold wall (38a) so as to supply cooling fluid provided by the cooling unit (12) to the first receiving space (60) of the trolley compartment (18), and a second cooling fluid supply opening (40b) being provided in the second cooling fluid supply manifold wall (38b) so as to supply cooling fluid provided by the cooling unit (12) to the second receiving space (62) of the trolley compartment (18), and/or
wherein the cooling fluid discharge manifold (42; 42a, 42b) comprises a first portion (42a) associated with the first receiving space (60) of the trolley compartment (18) and a second portion (42b) associated with the second receiving space (62) of the trolley compartment (18), a first cooling fluid discharge opening (46a) being provided in the cooling fluid discharge manifold wall (44) of the first portion (42a) of the cooling fluid discharge manifold (42; 42a, 42b) so as to discharge cooling fluid heated upon circulating through the first receiving space (60) of the trolley compartment (18) from the first receiving space (60) of the trolley compartment (18), and a second cooling fluid discharge opening (46b) being provided in the cooling fluid discharge manifold wall (44) of the second portion (42b) of the cooling fluid discharge manifold (42; 42a, 42b) so as to discharge cooling fluid heated upon circulating through the second receiving space (62) of the trolley compartment (18) from the second receiving space (62) of the trolley compartment (18), and/or wherein regions of the first and the second receiving space (60, 62) of the trolley compartment (18) which are disposed adjacent to the cooling fluid discharge manifold (42; 42a, 42b) are separated from each other by the connecting manifold (48) which connects the cooling fluid discharge manifold (42; 42a, 42b) to the cooling fluid inlet (14) of the cooling unit (12).

11. Method of operating a galley cooling system (10) suitable for use in an aircraft, the method comprising the steps:
- providing a cooling fluid by means of a cooling unit (12) to a trolley compartment (18) comprising a front side access opening (20), a back wall (22) arranged opposite to the front side access opening (20) and two sidewalls (24, 26) via a cooling fluid outlet (16) of the cooling unit (12),
- directing the cooling fluid provided by the cooling unit (12) through a cooling fluid supply manifold (32) connected to the cooling fluid outlet (16) of the cooling unit (12) and having a cooling fluid supply manifold wall (38; 38a, 38b) extending substantially parallel to at least one sidewall (24, 26) of the trolley compartment (18), and
- supplying the cooling fluid directed through the cooling fluid supply manifold (32) to the trolley compartment (18) via a cooling fluid supply opening (35).

12. Method according to Claim 11,
further comprising the step:
- discharging cooling fluid heated upon circulating through the trolley compartment (18) from the trolley compartment (18) via a cooling fluid discharge opening (46;
46a, 46b) and a cooling fluid discharge manifold (42; 42a, 42b), the cooling fluid discharge manifold (42; 42a, 42b) being connected to a cooling fluid inlet (14) of the cooling unit (12).

13. Method according to Claim 11 or 12,
wherein the cooling fluid is supplied to the trolley compartment (18) via a cooling fluid supply opening (40; 40a, 40b) provided in a region adjacent to a floor (34) of the trolley compartment (18) and/or wherein the cooling fluid is discharged from the trolley compartment (18) via a cooling fluid discharge opening (46; 46a, 46b) provided in a region adjacent to a top wall (36) of the trolley compartment (18).

14. Method according to Claim 12 or 13,
wherein the cooling fluid is discharged from the trolley compartment (18) via a cooling fluid discharge manifold (42; 42a, 42b) extending substantially parallel to the top wall (36) of the trolley compartment (18) with the cooling fluid discharge opening (46; 46a, 46b) facing an interior of the trolley compartment (18) and/or wherein cooling fluid flowing through the cooling fluid discharge manifold (42; 42a, 42b) is directed to the cooling fluid inlet (14) of the cooling unit (12) via a connecting manifold (48) extending substantially parallel to at least one sidewall (24, 26) of the trolley compartment (18).

15. Method according to any one of Claims 11 to 14,
wherein cooling fluid is provided by means of a cooling unit (12) which is arranged inside the trolley compartment (18) adjacent to one of the sidewalls (24, 26) of the trolley compartment (18) or in such a manner that the cooling unit (12) and the cooiing fluid supply manifold (32) separate a first and a second receiving space (60, 62) provided in the trolley compartment (18) for receiving trolleys (28a, 28b, 28c, 28d),
wherein cooling fluid provided by the cooling unit (12) in particular is supplied to the first and the second receiving space (60, 62) of the trolley compartment (18) via a cooling fluid supply manifold (32) comprising a first cooling fluid supply manifold wall (38a) facing a first sidewall (24) of the trolley compartment (18) and a second cooling fluid supply manifold wall (38b) facing a second sidewall (26) of the trolley compartment (18), a first cooling fluid supply opening (40a) being provided in the first cooling fluid supply manifold wall (38a) and supplying cooling fluid provided by the cooling unit (12) to the first receiving space (60) of the trolley compartment (18), and a second cooling fluid supply opening (40b) being provided in the second cooling fluid supply manifold wall (38b) and supplying cooling fluid provided by the cooling unit (12) to the second receiving space (62) of the trolley compartment (18), and/or wherein cooling fluid in particular is discharged from the first and the second receiving space (60, 62) of the trolley compartment (18) via a cooling fluid discharge manifold (42; 42a, 42b) comprising a first portion (42a) associated with the first receiving space (60) of the trolley compartment (18) and a second portion (42b) associated with the second receiving space (62) of the trolley compartment (18), a first cooling fluid discharge opening (46a) being provided in the cooling fluid discharge manifold wall (44) of the first portion (42a) of the cooling fluid discharge manifold (42; 42a, 42b) and discharging cooling fluid heated upon circulating through the first receiving space (60) of the trolley compartment (18) from the first receiving space (60) of the trolley compartment (18), and a second cooling fluid discharge opening (46b) being provided in the cooling fluid discharge manifold wall (44) of the second portion (42b) of the cooling fluid discharge manifold (42; 42a, 42b) and discharging cooling fluid heated upon circulating through the second receiving space (62) of the trolley compartment (18) from the second receiving space (62) of the trolley compartment (18).
